# EUROPÄISCHE PATENTSCHRIFT

(11) **EP 3 360 143 B1**
(45) Veröffentlichungstag und Bekanntmachung des Hinweises auf die Patenterteilung: **03.06.2020**
(21) Anmeldenummer: 16781346.8
(22) Anmeldetag: 06.10.2016
(51) Int. Cl.: H01F 38/14, H01F 3/08, H01F 1/37, H01F 27/28

(54) **ANORDNUNG ZUR INDUKTIVEN ENERGIEVERSORGUNG VON ELEKTRISCHEN ODER HYBRIDEN FAHRZEUGEN**
ARRANGEMENT FOR INDUCTIVELY SUPPLYING ENERGY TO ELECTRIC OR HYBRID VEHICLES
SYSTÈME POUR L'ALIMENTATION EN ÉNERGIE, PAR INDUCTION, DE VÉHICULES ÉLECTRIQUES OU HYBRIDES

(30) Priorität: 07.10.2015 DE 102015012950; 05.10.2016 DE 102016118900
(43) Veröffentlichungstag der Anmeldung: 15.08.2018
(73) Patentinhaber: Magment UG (Haftungsbeschränkt), 82008 Unterhaching (DE)
(72) Erfinder: ESGUERRA, Mauricio, 82024 Taufkirchen (DE)
(74) Vertreter: Fritzsche, Thomas
(86) Internationale Anmeldenummer: PCT/EP2016/073930
(87) Internationale Veröffentlichungsnummer: WO 2017/060387

(56) Entgegenhaltungen:
- US-A1- 2002 055 009
- US-A1- 2012 012 406

## Beschreibung

Die Erfindung betrifft eine Anordnung zur induktiven Energieversorgung von elektrischen und/oder hybriden Fahrzeugen durch Leistungsübertragung von einer ein Magnetfeld bereitstellenden, in eine befahrbare Baustruktur integrierten statischen Primärspule auf eine in dem zu versorgenden Fahrzeug befindliche, zur Wechselwirkung mit dem bereitgestellten Magnetfeld geeignete Sekundärspule. Die Erfindung betrifft ferner die Verwendung einer derartigen Anordnung, sowie Verfahren zu deren Herstellung und zur Herstellung eines Formkörpers zur Verwendung in dem Verfahren.

Eine Anordnung der eingangs genannten Art ist beispielsweise aus der US 5,311,973 bekannt. Bei dem dort beschriebenen Ladesystem für Elektrofahrzeuge wird eine mit einer Stromquelle verbundene stationäre Primärspule von einem Strom durchflossen, wodurch ein die Primärspule umgebendes Magnetfeld erzeugt wird. Dieses Magnetfeld dient als Medium für die Energieübertragung, bei welcher in einer Sekundärspule ein Strom induziert wird, entweder durch Relativbewegung zwischen Primär- und Sekundärspule oder durch Fluktuation des Magnetfeldes, wenn die Primärspule von einem Wechselstrom durchflossen wird. Üblicherweise ist bei derartigen Anordnungen die Primärspule stationär im Untergrund entlang einer Fahrbahn eingelassen, während sich die Sekundärspule in dem zu versorgenden Elektrofahrzeug befindet und sich mit diesem bewegt. Bei der aus der EP 0289 868 bekannten Anordnung wird beispielsweise das Magnetfeld mittels vorgefertigter, in die Fahrbahn eingelassener Module erzeugt, bei denen die jeweilige Primärspule in eine Mischung aus Sand und Kunstharz vollständig eingebettet ist. Allerdings ist bei derartigen Anordnungen die Verbindung mit der Fahrbahn rissempfindlich und der erzielbare Wirkungsgrad, d.h. der Anteil der an die Sekundärspule übertragenen Leistung im Verhältnis zur von der Primärspule bereitgestellten, in der Regel nicht zufriedenstellend. US 2012/012406 offenbart eine Anordnung zur induktiven Energieversorgung von elektrischen und/oder hybriden Fahrzeugen durch Leistungsübertragung von einer ein Magnetfeld bereitstellenden, in eine befahrbare Baustruktur integrierten statischen Primärspule auf eine in dem zu versorgenden Fahrzeug befindliche, zur Wechselwirkung mit dem bereitgestellten Magnetfeld geeignete Sekundärspule.

Die Aufgabe der Erfindung lag daher darin, eine Anordnung anzugeben, mittels welcher sich auf einfache, die Herstellung beliebiger Formen und Größen gestattende Weise eine Primärspule zuverlässig in eine Fahrbahn integrieren lässt und gleichzeitig eine optimale Feldfokussierung ermöglicht wird.

Diese Aufgabe wird gelöst durch eine Anordnung mit den Merkmalen des Anspruchs 1.

Dadurch, dass die Primärspule in der erfindungsgemäßen Weise in einen vorgefertigten Formkörper aus einem magnetisierbaren Beton eingebettet ist, wird eine Bündelung des erzeugten Magnetfeldes erreicht, welche die Energieübertragung auf eine in einem Fahrzeug befindliche Sekundärspule in dem für Elektrofahrzeuge gebräuchlichen Abstandsbereich von 5cm bis 50cm zwischen Primär- und Sekundärspule mit hoher Effizienz ermöglicht.

Es ist bei der erfindungsgemäßen Anordnung wichtig, dass die Primärspule nicht vollständig von dem magnetisierbaren Beton umschlossen ist, sondern dass ihr der vorgesehenen Ladeposition der Sekundärspule zugewandter Oberflächenbereich von dem magnetisierbaren Beton freigehalten wird. Als Grenzfall wäre eine Ausgestaltung anzusehen, bei der der magnetisierbare Beton als ebene Platte geformt ist, auf welche die Spule aufgelegt wird. Die damit erzielbare Bündelung des Magnetfeldes ist allerdings vielfach noch nicht optimal. Eine demgegenüber weiter verbesserte Bündelung kann in einfacher Weise dadurch erreicht werden, dass in dem magnetisierbaren Beton eine trog- oder rinnenförmige, zur Ladeposition der Sekundärspule hin offene Ausnehmung ausgebildet wird, in welche sich die Primärspule passgerecht einbetten, beispielsweise einlegen oder eindrücken lässt. Derartige Ausnehmungen können z.B. u- oder v-förmigen, halbkreisförmigen, parabelförmigen oder offenen polygonalen Querschnitt aufweisen. Sie lassen sich vorteilhaft durch Vergießen des magnetisierbaren Betons in entsprechende Formen direkt bereitstellen, können aber auch durch abtragende Bearbeitung aus Vorformen des magnetisierbaren Betons herausgearbeitet werden. In manchen Fällen, beispielsweise bei komplizierten Geometrien, kann die gewünschte Endform des mit einer Ausnehmung versehenen Formkörpers auch durch modularen Aufbau aus entsprechend geformten Vorformen aufgebaut werden. In den meisten Fällen hat es sich bewährt, wenn die Tiefe der Ausnehmung so mit dem Spulenquerschnitt abgestimmt wird, dass die Spule im eingebrachten Zustand nicht über den oberen Rand der Ausnehmung hinausragt. Es kann aber auch zweckmäßig sein und ist daher nicht ausgeschlossen, eine demgegenüber geringere Tiefe der Ausnehmung vorzusehen, so dass im eingebrachten Zustand die Spule zum Teil über den oberen Rand der Ausnehmung hinausragt. Derartige Ausführungsformen können zwischen solchen, bei denen die Spule nur geringfügig, bis zu solchen, bei denen die Spule bis zu etwa der Hälfte aus der Ausnehmung herausragt, variieren. Allgemein sind Ausgestaltungen der Ausnehmungen bevorzugt, die ein einfaches Einbringen der Primärspule durch Einlegen oder Eindrücken gestatten. Gemäß einer günstigen Ausführungsform werden der Spulenquerschnitt und der Querschnitt der Ausnehmung aufeinander abgestimmt, so dass der Luftspalt bzw. Zwischenraum zwischen der Spule und dem magnetisierbaren Beton nach Bedarf angepasst werden kann. In einer möglichen Ausführungsform kann die Ausnehmung nach Einbringen der Primärspule mit stabilisierendem Füllmaterial, wie etwa Sand, verfüllt werden, bevor zur Fertigstellung der befahrbaren Baustruktur der weitere Fahrbahnaufbau aufgebracht wird.

Als Primärspulen können die in den üblichen Ladesystemen für Elektrofahrzeuge gebräuchlichen Spulen oder Spulensysteme verwendet werden, die sich für die Einbettung in eine befahrbare Struktur wie etwa eine Zementbeton- oder Asphaltstraße eignen. Derartige Spulen sind dem Fachmann bekannt und bedürfen daher keiner weiteren Erläuterung. Beispiele, die nicht im Sinne einer Beschränkung anzusehen sind, sind Spulen mit rundem, ovalem, elliptischem oder polygonalem, wie etwa quadratischem, tetragonalem, trigonalem oder hexagonalem Querschnitt. Die Spulen werden üblicherweise zur Bereitstellung eines magnetischen Wechselfeldes verwendet, wobei in der Regel Frequenzen im Bereich von 10 kHz bis 500 kHz, insbesondere 20 kHz bis 100 kHz zum Einsatz kommen. Die benötigten Wechselspannungen und Ströme werden in an sich bekannter Weise von Wechselrichtern geliefert, die über vorteilhaft möglichst kurze Zuleitungen mit den Primärspulen verbunden sind.

Erfindungsgemäß werden die Primärspulen in einen magnetisierbaren Beton eingebettet, dessen Anfangspermeabilität mindestens 10, vorteilhaft mindestens 20, insbesondere mindestens 30 beträgt, wobei man aus Zweckmäßigkeitsgründen nur in besonderen Fällen auf eine Anfangspermeabilität von 100 oder mehr zurückgreifen wird. In der Regel wird man die Anfangspermeabilität um so höher wählen, je mehr es auf die Vermeidung von Streufeldern ankommt. Unter der Anfangspermeabilität ist diejenige Permeabilität zu verstehen, die das Material unter dem Einfluss eines nahezu verschwindenden magnetischen Feldes zeigt. Sie lässt sich beispielsweise gemäß der Norm IEC 620 44-2 bestimmen. Die Anfangspermeabilität wird im wesentlichen dadurch beeinflusst, wie bei dem jeweils ausgewählten weichmagnetischen Werkstoff das Verhältnis zwischen der Korngröße und dem Durchmesser der magnetischen Domänen ist, wobei als Domäne vorliegend ein Bereich mit homogener magnetischer Polarisation angesehen wird, wie er beispielsweise in Ferromagneten auftritt. Erfahrungsgemäß lässt sich eine hohe Anfangspermeabilität mit weichmagnetischen Materialien erzielen, deren Korndurchmesser relativ groß im Vergleich zum Domänendurchmesser ist. Beispielsweise liegen bei den mit Vorteil als weichmagnetischer Werkstoff verwendeten Ferriten die typischen Domänendurchmesser im Bereich von etwa 0,5 µm, während sich für ihren mittleren Korndurchmesser oftmals ein Bereich von 0,1 bis 10 mm als geeignet erwiesen hat. Die optimalen mittleren Korndurchmesser sowie die den jeweiligen mittleren Korndurchmessern entsprechende optimale Korngrößenverteilung werden zweckmäßig nach Maßgabe der gewünschten Permeabilität in Vorversuchen ermittelt. Dabei ist zu berücksichtigen, dass die zu einer ausreichenden Fokussierung erforderliche Magnetfeldbündelung durch den magnetisierbaren Beton letztlich vom Abstand zwischen der eingebetteten Primärspule und der Sekundärspule abhängt. Je größer dieser Abstand wird, um so geringer wird die zur Bündelung notwendige Mindestpermeabilität des magnetisierbaren Betons. Bei einem typischen Verhältnis der lateralen Spulenabmessung, d.h. der Spulenbreite, zum Spulenabstand zwischen Primär- und Sekundärspule im Bereich von bis zu ca.10 reichen in der Regel Permeabilitäten im Bereich von mindestens ca. 30 aus.

Der magnetisierbare Beton enthält als Hauptbestandteile einen oder mehrere weichmagnetische Werkstoffe sowie ein Bindemittel oder Bindemittelgemisch. Im fertigen weichmagnetischen Beton sind diese Komponenten möglichst homogen miteinander vermischt, wobei gegebenenfalls in geringen Anteilen Hilfsstoffe beigemischt werden können, beispielsweise um das Mischungs- oder Fließverhalten zu verbessern.

Als im magnetisierbaren Beton enthaltene weichmagnetische Werkstoffe kommen beispielsweise Weichferrite, nanokristalline Metalle, amorphe Metalle oder metallische Pulver in Frage. Die weichmagnetischen Werkstoffe können einzeln oder als Gemisch eingesetzt werden. Im folgenden wird aus Gründen der Einfachheit nur auf jeweils einen weichmagnetischen Werkstoff Bezug genommen; die Angaben gelten jedoch sinngemäß ebenso für Gemische mehrerer weichmagnetischer Werkstoffe. Die Verwendung von Ferriten hat den Vorteil, dass sich auch Ferritmaterial, wie es als Schrott bei der großtechnischen Herstellung herkömmlicher Bauteile aus Ferrit oder beim Recycling elektromagnetischer Geräte anfällt, verwerten lässt.

Der Gewichtsanteil des jeweils ausgewählten weichmagnetischen Werkstoffes liegt günstig bei mindestens 80 Gewichtsprozent, bevorzugt 85 bis 95 Gewichtsprozent. Dieser Anteil hat sich insbesondere bei Verwendung von Weichferriten bewährt, da sich einerseits eine gute Magnetisierbarkeit des Betons und andererseits eine gute Formbarkeit und mechanische Stabilität erzielen lässt. Grundsätzlich sind aber in manchen Fällen Gewichtsanteile des weichmagnetischen Werkstoffes bis zu einer Untergrenze von etwa 60 Gewichtsprozent und einer Obergrenze von etwa 98 Gewichtsprozent nicht ausgeschlossen. Zweckmäßig werden die für die jeweilige Anwendung geeigneten Gewichtsanteile mit Hilfe von Vorversuchen ermittelt. In der Regel wird man, schon aus Kostengründen, als Obergrenze denjenigen Wert nicht überschreiten, bei dem die magnetische Sättigung eintritt, während man als Untergrenze den Wert annehmen kann, bei dem noch eine ausreichende Magnetisierung erzielt wird.

In den meisten Fällen wird ein möglichst hoher Füllungsgrad des weichmagnetischen Werkstoffes im magnetisierbaren Beton angestrebt. Dies lässt sich günstig beispielsweise dadurch erreichen, dass weichmagnetische Werkstoffe mit bestimmten Korngrößenverteilungen ausgewählt werden, um eine möglichst dichte Packung der Werkstoffpartikel zu erzielen. Es hat sich bewährt, einen weichmagnetischen Werkstoff, beispielsweise einen weichmagnetischen Ferrit, in zwei oder mehreren Korngrößenfraktionen vorzulegen. Dabei können insbesondere eine erste Fraktion mit einem mittleren Korndurchmesser von 2 bis 10 mm bei einer Korngrößenverteilung zwischen 0,5 und 20 mm und eine zweite Fraktion mit einem mittleren Korndurchmesser von 0,1 bis 0,5 mm bei einer Korngrößenverteilung von 0,01 bis 5 mm kombiniert werden. Üblicherweise werden solche Fraktionen in annähernd gleichen Gewichtsanteilen vorgelegt, wobei Abweichungen von bis zu etwa 20 Gewichtsprozent nach oben oder unten akzeptiert werden können. Derartige Kombinationen von unterschiedlichen Fraktionen weichmagnetischer Ferrite sind beispielsweise aus der EP 1 097 463 bekannt und können gemäß diesem Dokument zur Herstellung magnetisierbarer Erzeugnisse unter anderem in eine Matrix aus hydraulischem Zement eingebettet werden, welche geformt und schließlich verfestigt wird. Der weichmagnetische Werkstoff ist dabei mit einem Gewichtsanteil von mehr als 80 Prozent in dem jeweiligen magnetisierbaren Erzeugnis enthalten. Die formbare Masse wird in dem genannten Dokument neben anderen Anwendungen auch als besonders geeignet zum Umhüllen eines elektrischen Bauelements wie einer Spule zum Zwecke der Abschirmung beschrieben.

Ein besonderer Vorteil der erfindungsgemäßen Anordnung liegt darin, dass für das im magnetisierbaren Beton enthaltene Bindemittel oder Bindemittelgemisch solche Materialien ausgewählt werden können, die mit den für die befahrbare Baustruktur verwendeten Materialien kompatibel sind. So eignen sich als Bindemittel beispielsweise aus dem Straßenbau geläufige Materialien wie hydraulischer Zement, z.B. Weißzement, Portlandzement oder Bitumen, z.B. Straßenbaubitumen, Naturbitumen oder polymermodifizierte Bitumentypen. Obwohl auch der Einsatz von Bindemittelgemischen in manchen Fällen grundsätzlich nicht ausgeschlossen ist, hat es sich zumeist bewährt, nur auf ein bestimmtes Bindemittel zurückzugreifen. Beispielsweise lässt sich Weißzement mit Vorteil dann einsetzen, wenn es auf besondere Druckfestigkeit des magnetisierbaren Betons ankommt. Vorteilhaft ist es auch, durch entsprechende Auswahl des Bindemittels das thermische Dehnungs- und Erweichungsverhalten des magnetisierbaren Betons an dasjenige der jeweiligen befahrbaren Baustruktur, beispielsweise einer Zementbetonstraße oder einer Asphaltstraße, anzupassen. Dadurch entsteht eine dauerhafte und robuste Verbindung zwischen der befahrbaren Baustruktur und der darin integrierten Primärspule. Insbesondere kann dadurch auch sichergestellt werden, dass sich nachträglich eine Primärspule mit dem sie umgebenden magnetisierbaren Beton in eine bereits vorhandene Straße oder Fahrbahn rissfrei und dauerhaft integrieren lässt. Bei der Auswahl des Bindemittels ist auch zu beachten, dass der Einsatz von manchen grundsätzlich zwar geeigneten Stoffen wie etwa Steinkohlenteer aufgrund gesetzlicher Vorgaben nur eingeschränkt oder nicht zulässig sein kann.

Der magnetisierbare Beton kann neben dem weichmagnetischen Werkstoff und dem Bindemittel oder Bindemittelgemisch auch weitere Hilfsstoffe, z.B. Fließmittel, Füllstoffe, Gips und dergleichen enthalten, durch welche sich Eigenschaften wie Fließverhalten, Vergießbarkeit, Verfestigung und/oder Aushärtung steuern lassen.

Der magnetisierbare Beton wird für die Herstellung einer erfindungsgemäßen Anordnung zunächst als vorteilhaft möglichst homogene gießfähige Mischung der Hauptkomponenten sowie gegebenenfalls der Hilfsstoffe bereitgestellt. Dafür eignen sich übliche Mischverfahren, wie sie dem Fachmann beispielsweise aus dem Straßenbau bekannt sind. So wird man bei einem magnetisierbaren Beton, bei dem ein Bindemittel auf Zementbasis vorgesehen ist, in der Regel beim Mischvorgang Wasser sowie gegebenenfalls einen Verflüssiger hinzufügen. Als Mischer können übliche Betonmischer eingesetzt werden. Bei einem magnetisierbaren Beton, bei dem ein Bindemittel auf Bitumenbasis vorgesehen ist, können in der fachüblichen Weise für den Mischvorgang Heizmischer verwendet werden, die die erforderliche Misch- und Verarbeitungstemperatur zur Verfügung stellen, um die Gießfähigkeit der Mischung zu gewährleisten.

Grundsätzlich kann beim Mischvorgang so vorgegangen werden, dass der weichmagnetische Werkstoff vorgelegt und dann mit dem Bindemittel vermischt wird. Ebenso ist es möglich, das Bindemittel vorzulegen und den weichmagnetischen Werkstoff darin einzutragen. In vielen Fällen werden jedoch die Komponenten zusammen vorgelegt und vermischen sich nach und nach beim anschließenden Mischvorgang. Wenn der weichmagnetische Werkstoff in verschiedenen Korngrößenfraktionen eingesetzt wird, kann es auch zweckmäßig sein, zunächst separate Mischungen jeweils einer Korngrößenfraktion mit dem Bindemittel herzustellen und dann diese Mischungen zu vermischen und ggf. weiter zu homogenisieren.

Die solchermaßen bereitgestellte gießfähige Mischung des magnetisierbaren Betons wird in einem nächsten Schritt in eine für die Aufnahme der Primärspule geeignete Gestalt gebracht. Gemäß einer günstigen Vorgehensweise wird dafür eine vorgefertigte Form auf dem Untergrund der befahrbaren Baustruktur vorgelegt. In diese wird die bereitgestellte Mischung vergossen und gegebenenfalls verdichtet, so dass nach dem Festwerden der Mischung, in der Regel durch Erhärten oder Erkalten, der gebildete Formkörper eine Ausnehmung aufweist, die für die passgerechte Aufnahme der jeweils vorgesehenen Primärspule sowie ggf. auch für deren Zuleitungen geeignet ist. Erfahrungsgemäß kann jedoch aufgrund der guten Fließeigenschaften der vorstehend beschriebenen magnetisierbaren Betone in den meisten Fällen auf zusätzliches Verdichten verzichtet werden.

In diese Ausnehmung wird anschließend die Primärspule eingebracht, beispielsweise eingelegt oder eingedrückt. Zweckmäßig werden dann nach Entfernen der Gießform die vorgesehenen elektrischen Versorgungsleitungen der Primärspule verlegt und mit dieser verbunden. Es ist jedoch auch möglich, dass die elektrischen Versorgungsleitungen bereits in einem vorhergehenden Schritt verlegt werden, so dass sie nach Entfernen der Gießform nur noch mit der Primärspule verbunden werden müssen.

Abschließend kann dann die befahrbare Baustruktur fertiggestellt werden, beispielsweise indem gemäß üblichem Fahrbahnaufbau eine Deckschicht auf Asphalt- oder auf Zementbasis aufgebracht wird.

Grundsätzlich kann der Formkörper mit den für die Aufnahme der Primärspule vorgesehenen Ausnehmungen auch lokal getrennt von seinem Einsatzort hergestellt und erst nachfolgend in seine vorgesehene Position, beispielsweise eine passgerechte Ausnehmung, in der befahrbaren Baustruktur eingebracht werden. Die Ausnehmungen im Formkörper lassen sich neben der bevorzugten Formgebung durch Gießen auch durch abtragende Bearbeitung, z.B. Fräsen, Schneiden oder Schleifen, oder durch aufbauende Bearbeitung durch Zusammenfügen entsprechend geformter Einzelteile oder Module in der gewünschten Form bereitstellen.

Nachstehend wird die Erfindung an Hand der Figuren 1 bis 3 beispielhaft näher erläutert. In Fig. 1 ist schematisch im Querschnitt eine Übertragerstrecke dargestellt, wie sie zum dynamischen oder auch statischen induktiven Laden von Elektrofahrzeugen zum Einsatz kommt.
In Fig. 2 ist schematisch im Querschnitt eine erfindungsgemäße Anordnung mit einer in einen Fahrbahnaufbau integrierten, in einen magnetisierbaren Beton eingebetteten Primärspule gezeigt.
In Fig. 3 ist schematisch im Querschnitt der Aufbau eines erfindungsgemäß zum Einbetten einer Primärspule geeigneten magnetisierbaren Betons gezeigt.

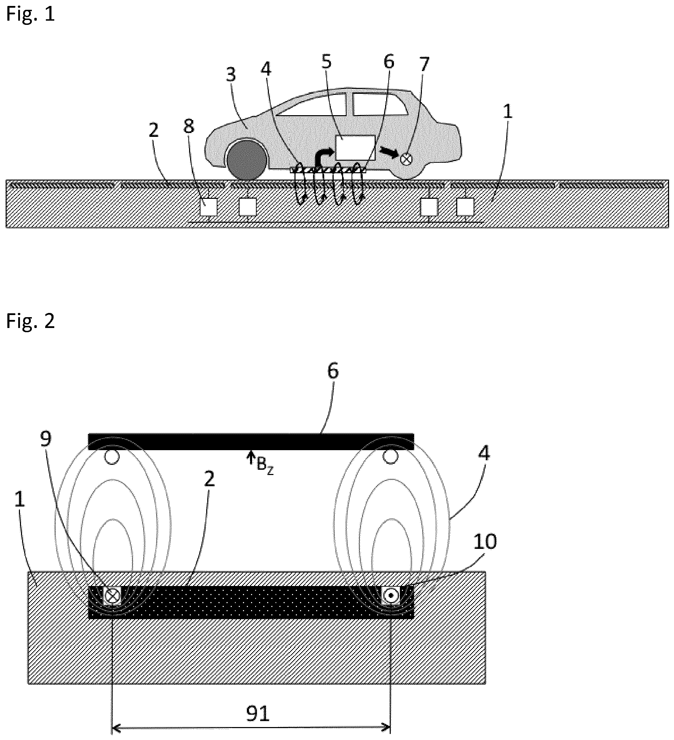

Fig. 1 zeigt einen Fahrbahnaufbau 1, in den in Reihe hintereinander angeordnete in magnetisierbaren Beton 2 eingebettete Primärspulen integriert sind. Durch die Feldlinien 4 ist schematisch angedeutet, dass durch die Primärspulen ein mittels des magnetisierbaren Betons fokussiertes Magnetfeld bereitgestellt ist. Wenn ein Fahrzeug 3 mit einer darin befindlichen Sekundärspule 6 in den Bereich des beispielsweise als Wechselfeld bereitgestellten Magnetfeldes kommt, wird in der Sekundärspule eine Wechselspannung induziert, die zur Spannungsversorgung des Fahrzeuges benutzt werden kann. Beispielsweise kann die induzierte Wechselspannung zur Speicherung in Akkumulatoren gleichgerichtet und begrenzt werden. Gemäß der dargestellten Ausführungsform kann die übertragene elektrische Energie mit Hilfe eines geeigneten Steuerungsmoduls 5 auch direkt an den Antrieb 7 weitergeleitet werden. Die zur Versorgung der Primärspulen benötigte Wechselspannung mit den zur Energieübertragung notwendigen Strömen wird von Wechselrichtern 8 erzeugt, die zweckmäßig über kurze Zuleitungen mit den in den magnetisierbaren Beton 2 eingebetteten Primärspulen verbunden sind.

Fig. 2 zeigt die Einbettung der Primärspule 9 mit einer Spulenbreite 91 in den magnetisierbaren Beton 2, der seinerseits in den Fahrbahnaufbau 1 eingepasst ist. Der Formkörper aus magnetisierbarem Beton ist mit trogförmigen, zur Ladeposition der Sekundärspule 6 hin offenen Ausnehmungen 10 versehen, in welchen sich die Primärspule 9 befindet. Wird diese von einem Strom durchflossen, so bildet sich ein Magnetfeld aus, dessen Feldlinien 4, wie schematisch gezeigt, durch die Wirkung des magnetisierbaren Betons 2 im Hinblick auf die vorgesehene Ladeposition eines Elektrofahrzeugs beim Durchfahren einer Übertragerstrecke zur dynamischen oder statischen induktiven Ladung fokussiert sind. Dabei gelangt die Sekundärspule 6 des Elektrofahrzeugs in den Wirkungsbereich des Magnetfeldes und eine Spannung wird induziert. Durch die entsprechende Fokussierung des Magnetfeldes kann erreicht werden, dass auch in einer einem Vielfachen der Spulenbreite 91 entsprechenden Entfernung von der Primärspule die an die Sekundärspule übertragbare Leistung mindestens noch 80% der primärspulenseitig bereitgestellten Leistung beträgt. Es erscheinen sogar Anordnungen möglich, bei denen in einer der zehnfachen Spulenbreite entsprechenden Entfernung von der Primärspule mindestens 80 % der primärspulenseitig bereitgestellten Leistung an die Sekundärspule übertragbar sein können.

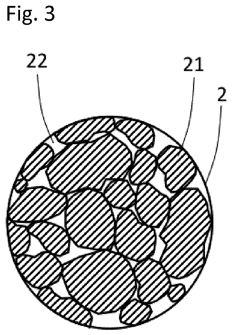

Fig. 3 zeigt schematisch im Querschnitt den Aufbau eines bei der erfindungsgemäßen Anordnung verwendbaren magnetisierbaren Betons 2. Dieser baut sich auf aus einer Vielzahl von weichmagnetische Partikeln 21, beispielsweise aus Weichferrit, die in eine Matrix 22 eines Bindemittels, beispielsweise aus Portlandzement, eingearbeitet sind. Dabei können die Partikel 21 sowohl miteinander in Kontakt kommen, als auch durch das Bindemittel voneinander getrennt sein. Gegebenenfalls können auch Partikel von Hilfsstoffen wie etwa Quarz, Tonerde, Gips oder dergleichen vorhanden sein, die die Kompatibilität des magnetisierbaren Betons mit dem Fahrbahnaufbau sicherstellen.

In einem Ausführungsbeispiel wird in einer ersten Vorgehensweise zur Integration in einen Fahrbahnaufbau auf Portlandzementbasis zunächst in üblicher Betontechnologie ein magnetisierbarer Beton gemischt. Dabei wird als weichmagnetischer Werkstoff eine Mischung von ca. 50 Masse-% weichmagnetischem Ferrit mit einer Körnung mit mittlerem Korndurchmesser von etwa 5 mm, und ca. 40 Masse-% weichmagnetischem Ferrit mit einer Körnung mit mittlerem Korndurchmesser von etwa 0,25 mm (Ermittlung der mittleren Korndurchmesser jeweils durch Siebanalyse) eingesetzt. Als Bindemittel dient eine Mischung aus ca. 5 Masse-% eines Portlandzementes, ca. 0,5 Masse-% eines üblichen Verflüssigers sowie ca. 4,5 Masse-% Wasser. Weichmagnetischer Werkstoff und Bindemittel werden in einem üblichen Mischer gemischt, bis sich eine homogene, gießfähige Masse gebildet hat. Eine Probe dieser Mischung zeigte nach dem Aushärten eine Anfangspermeabilität von 35, gemessen an einem Ringkern.

Die hergestellte Mischung wird in eine auf dem Untergrund eines Fahrbahnaufbaus vorgelegte, vorgefertigte Form gegossen, wobei die Form so gestaltet ist, dass die vergossene Masse eine zur vorgesehenen Ladeposition der Sekundärspule hin offene Ausnehmung für die Aufnahme einer Primärspule bildet. Nach dem Erhärten des Betons wird die Gießform entfernt, die Primärspule mit einer Spulenbreite von 80 cm wird in die Ausnehmung eingebettet und front- und endseitig mit den vorgesehenen elektrischen Leitungen verbunden. Anschließend wird in der üblichen Weise eine Deckschicht aus Portlandzementbeton aufgebracht.

In einer zweiten Vorgehensweise wird ein zur Integration in einen Fahrbahnaufbau auf Asphaltbasis geeigneter magnetisierbarer Beton gemischt, wobei ein bei einer Temperatur von ca. 210 °C betriebener Heizmischer zur Herstellung der Mischung eingesetzt wird. Als weichmagnetischer Werkstoff wird wiederum eine Mischung von ca. 50 Masse-% weichmagnetischem Ferrit mit einer Körnung mit mittlerem Korndurchmesser von etwa 5 mm, und ca. 40 Masse-% weichmagnetischem Ferrit mit einer Körnung mit mittlerem Korndurchmesser von etwa 0,25 mm (Ermittlung der mittleren Korndurchmesser jeweils durch Siebanalyse) eingesetzt. Als Bindemittel dienen ca. 10 Masse-% eines mit dem vorgesehenen Straßenaufbau kompatiblen Bitumens. Weichmagnetischer Werkstoff und Bindemittel werden in dem Heizmischer gemischt, bis eine homogene gießfähige Mischung entstanden ist. Eine Probe der hergestellten Mischung zeigte einen dem bei der ersten Vorgehensweise erhaltenen Wert vergleichbare Anfangspermeabilität von etwa 35, gemessen ebenfalls an einem Ringkern.

Analog zur ersten Vorgehensweise wird die erhaltene Mischung in eine auf dem Untergrund eines Fahrbahnaufbaus vorgelegte, vorgefertigte Form gegossen und verdichtet, so dass nach dem Erkalten eine geeignete Gestalt für die Aufnahme einer Primärspule entsteht. Nachfolgend wird die Gießform entfernt, die Primärspule mit einer Spulenbreite von 80 cm wird in die zur vorgesehenen Ladeposition der Sekundärspule hin offene Ausnehmung eingebettet und front- und endseitig mit den vorgesehenen elektrischen Leitungen verbunden. Anschließend wird in der üblichen Weise eine Deckschicht aus Asphalt aufgebracht.

Durch die solcherart an den Fahrbahnaufbau angepasste Zusammensetzung des magnetisierbaren Betons gemäß der ersten und der zweiten Vorgehensweise werden unterschiedliche thermische Dehnungen von Fahrbahnaufbau und magnetisierbarem Beton, die zur mechanischen Zerrüttung und damit zu verstärktem Verschleiß bis hin zum Funktionsverlust führen können, verhindert. Ebenso wird durch Temperaturwechsel die Funktionsfähigkeit der Wechselspannungs-Speisung der Primärspulen nicht gefährdet.

Zur Bereitstellung des erforderlichen Magnetfeldes werden die Primärspulen mit Wechselrichtern verbunden, mit deren Hilfe sich Wechselspannungen mit den zur Energieübertragung notwendigen Strömen erzeugen lassen. Für das magnetische Wechselfeld wurden Frequenzen im Bereich von 10 kHz bis 500 kHz eingesetzt. Bei einer Permeabilität des magnetisierbaren Betons von µᵢ = 40 konnte bei einem Abstand von 25 cm zu einer Sekundärspule aufgrund der durch die Einbettung der Primärspule in den magnetisierbaren Beton erzielten Fokussierung des Magnetfeldes eine Effizienz von 95% bei der Energieübertragung erreicht werden.

Neben der hohen Effizienz der kontaktlos induktiven Leistungsübertragung zeichnen sich die erfindungsgemäßen Anordnungen auch dadurch aus, dass sie eine Magnetfeldbündelung ermöglichen, die beim Ladevorgang die Einhaltung vorgeschriebener Magnetfeld-Obergrenzen im Innenraum und in der Nähe von elektrischen und/oder hybriden Fahrzeugen gestattet. Die erfindungsgemäße Magnetfeldbündelung lässt sich mit Vorteil für das statische, stationäre oder dynamische Laden von Batterien oder Akkumulatoren in elektrischen und/oder hybriden Fahrzeugen einsetzen. Sie eignet sich gleichermaßen für die direkte Versorgung von elektrischen und/oder hybriden Fahrzeugen mit Energie, z.B. Antriebsenergie. Die erfindungsgemäße Anordnung kann z.B. bei bemannten oder unbemannten straßen- oder schienengebundenen Fahrzeugen eingesetzt werden. Sie ermöglicht auch den Einbau von Primärspulen über längere Strecken im Fahrbahnaufbau und somit das dynamische induktive Laden während der Fahrt. Die erfindungsgemäße Anordnung wird mit Vorteil wegen der Kompatibilität der Materialien bei befahrbaren Baustrukturen auf Asphaltbeton- oder Zementbetonbasis eingesetzt. Sie eignet sich daher gleichermaßen für Asphalt- oder Zementbetonstraßen wie auch für Zement- oder Asphaltböden innerhalb oder außerhalb von Gebäuden, beispielsweise wenn es um kontaktlos induktives Laden oder Antrieb von Zubringerfahrzeugen, z.B. in Fabrik- oder Lagerhallen geht. Ein weiterer günstiger Einsatzbereich liegt bei schienengebundenen Transportmitteln, die auf Schienenstrecken verkehren, die in eine Asphalt- oder Zementbetonstruktur integriert sind, wie etwa beim oberleitungsfreien Betrieb von Straßenbahnen.

## Patentansprüche

1. Anordnung zur induktiven Energieversorgung von elektrischen und/oder hybriden Fahrzeugen (3) durch Leistungsübertragung von einer ein Magnetfeld bereitstellenden, in eine befahrbare Baustruktur integrierten statischen Primärspule (9) auf eine in dem zu versorgenden Fahrzeug befindliche, zur Wechselwirkung mit dem bereitgestellten Magnetfeld geeignete Sekundärspule (6), **dadurch gekennzeichnet, dass** die Primärspule in einen vorgefertigten Formkörper (3) aus einem magnetisierbaren Beton (2), welcher eine Anfangspermeabilität von mindestens 10 aufweist, in der Weise eingebettet ist, dass das durch die Primärspule (9) bereitgestellte Magnetfeld auf die vorgesehene Ladeposition der Sekundärspule (6) hin gebündelt wird.

2. Anordnung nach Anspruch 1, **dadurch gekennzeichnet, dass** in dem Formkörper aus einem magnetisierbaren Beton eine insbesondere trog- oder rinnenförmige, zur Ladeposition der Sekundärspule hin offene Ausnehmung (10) ausgebildet ist, in welche die Primärspule eingebettet ist, oder der Formkörper als ebene Platte geformt ist, auf welche die Primärspule aufgelegt ist.

3. Anordnung nach Anspruch 1 oder 2, **dadurch gekennzeichnet, dass** der magnetisierbare Beton Partikel (21) eines oder mehrerer weichmagnetischer Werkstoffe enthält, die ausgewählt sind aus der Gruppe der Weichferrite, der nanokristallinen Metalle, der amorphen Metalle und der metallischen Pulver, und diese in eine Matrix (22) eines für Betone verwendbaren Bindemittels oder Bindemittelgemisches eingearbeitet sind.

4. Anordnung nach Anspruch 3, **dadurch gekennzeichnet, dass** das Bindemittel verfestigter hydraulischer Zement, Weißzement, Portlandzement oder Bitumen ist.

5. Anordnung nach Anspruch 3 oder 4, **dadurch gekennzeichnet, dass** der weichmagnetische Werkstoff mit einem Anteil von mindestens 80 Gewichtsprozent in dem magnetisierbaren Beton enthalten ist.

6. Anordnung nach einem oder mehreren der Ansprüche 3 bis 5, **dadurch gekennzeichnet, dass** der weichmagnetische Werkstoff aus einer Mischung von annähernd gleichen Gewichtsanteilen von weichmagnetischem Ferrit mit einem mittleren Korndurchmesser von 2 bis 10 mm und weichmagnetischem Ferrit mit einem mittleren Korndurchmesser von 0,1 bis 0,5 mm besteht.

7. Anordnung nach einem oder mehreren der Ansprüche 1 bis 6, **dadurch gekennzeichnet, dass** die befahrbare Baustruktur eine Asphaltstraße, eine Zementbetonstraße, ein Zement- oder Asphaltboden innerhalb oder außerhalb eines Gebäudes oder eine in eine Asphalt- oder Zementbetonstruktur integrierte Schienenstrecke ist.

8. Anordnung nach einem oder mehreren der Ansprüche 1 bis 7, **dadurch gekennzeichnet, dass** das thermische Dehnungs- und Erweichungsverhalten des magnetisierbaren Betons an das der befahrbaren Baustruktur angepasst ist.

9. Verwendung einer Anordnung nach einem oder mehreren der Ansprüche 1 bis 8 für das statische, stationäre oder dynamische Laden von Batterien in elektrischen und/oder hybriden Fahrzeugen, oder für den direkten Antrieb solcher Fahrzeuge.

10. Verfahren zur Herstellung einer Anordnung nach einem oder mehreren der Ansprüche 1 bis 8, **gekennzeichnet durch** die folgenden Schritte:
- Bereitstellen einer gießfähigen Mischung eines magnetisierbaren Betons (2), welcher eine Anfangspermeabilität von mindestens 10 aufweist,
- Vergießen des magnetisierbaren Betons in eine, auf dem Untergrund einer befahrbaren Baustruktur oder lokal getrennt von dieser, vorgelegte Form in der Weise, dass nach der Verfestigung des Betons ein Formkörper mit einer für die Aufnahme einer Primärspule (9) geeigneten insbesondere trog- oder rinnenförmige Ausnehmung (10) gebildet ist oder durch nachfolgende abtragende oder aufbauende Bearbeitung gebildet wird,
- Einbringen der Primärspule (9) in die insbesondere trog- oder rinnenförmige Ausnehmung (10) des Formkörpers
- gegebenenfalls Einbringen des Formkörpers in eine passgerechte Ausnehmung in einer befahrbaren Baustruktur,
- Verbindung der Primärspule (9) mit den vorgesehenen elektrischen Versorgungsleitungen,
- Fertigstellen der befahrbaren Baustruktur.

11. Verfahren zur Herstellung eines Formkörpers zur Verwendung in einem Verfahren nach Anspruch 10, **gekennzeichnet durch** die folgenden Schritte:
- Bereitstellen einer gießfähigen Mischung eines magnetisierbaren Betons (2), welcher eine Anfangspermeabilität von mindestens 10 aufweist,
- Vergießen des magnetisierbaren Betons in eine, auf dem Untergrund einer befahrbaren Baustruktur oder lokal getrennt von dieser, vorgelegte Form in der Weise, dass nach der Verfestigung des Betons ein Formkörper mit einer für die Aufnahme einer Primärspule (9) geeigneten insbesondere trog- oder rinnenförmige Ausnehmung (10) gebildet ist oder durch nachfolgende abtragende oder aufbauende Bearbeitung gebildet wird.

12. Verwendung eines nach dem Verfahren gemäß Anspruch 11 herstellbaren Formkörpers in einem Verfahren nach Anspruch 10.

## Claims

1. An arrangement for inductively supplying energy to electric and/or hybrid vehicles (3) by transferring power from a static primary coil (9) integrated in a drivable civil structure and providing a magnetic field to a secondary coil (6) located in the vehicle to be supplied suitable for interaction with the provided magnetic field, **characterized in that** the primary coil is embedded in a prefabricated molded body (3) made from a magnetizable concrete (2),
having an initial permeability of at least 10 such that the magnetic field provided by the primary coil (9) is bundled towards the intended charging position of the secondary coil (6) .

2. The arrangement according to claim 1, **characterized in that** an, in particular, trough or channel-shaped recess (10) that is open towards the charging position of the secondary coil is formed in the molded body made from a magnetizable concrete, in which the primary coil is embedded, or the molded body is formed as a planar panel, on which the primary coil is supported.

3. The arrangement according to claim 1 or 2, **characterized in that** the magnetizable concrete contains particles (21) of one or more soft magnetic materials selected from the group of soft ferrites, nanocrystalline metals, amorphous metals and metallic powders and these are incorporated in a matrix (22) of a binding agent or binding agent mixture usable for concretes.

4. The arrangement according to claim 3, **characterized in that** the binding agent is solidified hydraulic cement, white cement, Portland cement or bitumen.

5. The arrangement according to claim 3 or 4, **characterized in that** the soft magnetic material is contained in the magnetizable concrete in a percentage of at least 80 percent.

6. The arrangement according to any one or more of claims 3 to 5, **characterized in that** the soft magnetic material consists of a mixture of approximately equal percentages by weight of soft magnetic ferrite with an average grain diameter of 2 to 10mm and soft magnetic ferrite with an average grain diameter of 0.1 to 0.5mm.

7. The arrangement according to any one or more of claims 1 to 6, **characterized in that** the drivable civil structure is an asphalt road, a cement concrete road, a cement or asphalt floor inside or outside a building or a railway track integrated in an asphalt or cement concrete structure.

8. The arrangement according to any one or more of claims 1 to 7, **characterized in that** the thermal expansion and softening behavior of the magnetizable concrete is adapted to that of the drivable civil structure.

9. The use of an arrangement according to any one or more of claims 1 to 8 for the static, stationary or dynamic charging of batteries in electric and/or hybrid vehicles or for the direct drive of such vehicles.

10. A method for manufacturing an arrangement according to any one or more of claims 1 to 8, **characterized by** the following steps:
- providing a pourable mixture of a magnetizable concrete (2) having an initial permeability of at least 10,
- pouring the magnetizable concrete in a mold provided on or locally separated from the substrate of a drivable civil structure such that, after solidification of the concrete, a molded body with an, in particular, trough or channel-shaped recess (10) suitable for receiving a primary coil (9) is formed or will be formed by subsequent subtractive or additive machining,
- introducing the primary coil (9) into the, in particular, trough or channel-shaped recess (10) of the molded body
- introducing the molded body into a conforming recess in a drivable civil structure, as appropriate,
- connecting the primary coil (9) to the designated electrical supply lines,
- completing the drivable civil structure.

11. A method for manufacturing a molded body for use in a method according to claim 10, **characterized by** the following steps:
- providing a pourable mixture of a magnetizable concrete (2) having an initial permeability of at least 10,
- pouring the magnetizable concrete in a mold provided on or locally separated from the substrate of a drivable civil structure such that, after solidification of the concrete, a molded body with an, in particular, trough or channel-shaped recess (10) suitable for receiving a primary coil (9) is formed or will be formed by subsequent subtractive or additive machining.

12. The use of a molded body manufacturable according to the method according to claim 11 in a method according to claim 10.

## Revendications

1. Système pour l'alimentation en énergie par induction de véhicules électriques et/ou hybrides (3) par transfert de puissance d'une bobine primaire (9) statique intégrée dans une structure de construction carrossable, mettant à disposition un champ magnétique à une bobine secondaire (6) convenant pour l'interaction avec le champ magnétique mis à disposition, située dans le véhicule à alimenter, **caractérisé en ce que** la bobine primaire est incorporée dans un corps moulé préfabriqué (3) en un béton magnétisable (2), lequel présente une perméabilité initiale d'au moins 10, de sorte que le champ magnétique mis à disposition par la bobine primaire (9) est concentré sur la position de charge prévue de la bobine secondaire (6).

2. Système selon la revendication 1, **caractérisé en ce qu'**un évidement (10) ouvert vers la position de charge de la bobine secondaire, en particulier en forme d'auge ou de caniveau est réalisé dans le corps moulé en un béton magnétisable, dans lequel la bobine primaire est incorporée, ou le corps moulé est formé en tant que plaque plane, sur laquelle la bobine primaire est posée.

3. Système selon la revendication 1 ou 2, **caractérisé en ce que** le béton magnétisable contient des particules (21) d'un ou plusieurs matériaux magnétiques doux, qui sont sélectionnés dans le groupe des ferrites doux, des métaux nanocristallins, des métaux amorphes et des poudres métalliques, et ceux-ci sont incorporés dans une matrice (22) d'un mélange de liant ou liant utilisable pour les bétons.

4. Système selon la revendication 3, **caractérisé en ce que** le liant est du ciment hydraulique solidifié, du ciment blanc, du ciment de Portland ou du bitume.

5. Système selon la revendication 3 ou 4, **caractérisé en ce que** le matériau magnétique doux avec une part d'au moins 80 pourcent en poids est contenu dans le béton magnétisable.

6. Système selon une ou plusieurs des revendications 3 à 5, **caractérisé en ce que** le matériau magnétique doux se compose d'un mélange de parts en poids approximativement égales de ferrite magnétique doux avec une granulométrie moyenne de 2 à 10 mm et de ferrite magnétique doux avec une granulométrie moyenne de 0,1 à 0,5 mm.

7. Système selon une ou plusieurs des revendications 1 à 6, **caractérisé en ce que** la structure de construction carrossable est une route asphaltée, une route en béton de ciment, un sol en ciment ou asphalte à l'intérieur ou à l'extérieur d'un bâtiment ou une ligne ferroviaire intégrée dans une structure en asphalte ou béton de ciment.

8. Système selon une ou plusieurs des revendications 1 à 7, **caractérisé en ce que** le comportement de ramollissement et de dilatation thermique du béton magnétisable est adapté à celui de la structure de construction carrossable.

9. Utilisation d'un système selon une ou plusieurs des revendications 1 à 8 pour la charge statique, stationnaire ou dynamique de batteries dans des véhicules électriques et/ou hybrides, ou pour l'entraînement direct de tels véhicules.

10. Procédé de fabrication d'un système selon une ou plusieurs des revendications 1 à 8 **caractérisé par** les étapes suivantes :
- mise à disposition d'un mélange pouvant être coulé d'un béton magnétisable (2), lequel présente une perméabilité initiale d'au moins 10,
- coulage du béton magnétisable dans un moule présenté, sur le support d'une structure de construction carrossable ou séparé localement de celle-ci, de sorte qu'après la solidification du béton, un corps moulé avec un évidement en particulier en forme d'auge ou de caniveau (10) convenant pour la réception d'une bobine primaire (9) est formée ou est formée par usinage d'enlèvement ou de construction successif,
- introduction de la bobine primaire (9) dans l'évidement (10) en particulier en forme d'auge ou de caniveau du corps moulé
- le cas échéant introduction du corps moulé dans un évidement adapté dans une structure de construction carrossable,
- raccordement de la bobine primaire (9) avec les lignes d'alimentation électriques prévues,
- finalisation de la structure de construction carrossable.

11. Procédé de fabrication d'un corps moulé à utiliser dans un procédé selon la revendication 10, **caractérisé par** les étapes suivantes :
- mise à disposition d'un mélange pouvant être coulé d'un béton magnétisable (2), lequel présente une perméabilité initiale d'au moins 10,
- coulage du béton magnétisable dans un moule présenté, sur le support d'une structure de construction carrossable ou séparé localement de celle-ci, de sorte qu'après la solidification du béton, un corps moulé avec un évidement en particulier en forme d'auge ou de caniveau (10) convenant pour la réception d'une bobine primaire (9) est formée ou est formée par usinage d'enlèvement ou de construction successif.

12. Utilisation d'un corps moulé pouvant être fabriqué selon le procédé selon la revendication 11 dans un procédé selon la revendication 10.
